(19) Europäisches Patentamt
European Patent Office
Office européen des brevets

(11) EP 2 313 960 B1

(12) **FASCICULE DE BREVET EUROPEEN**

(45) Date de publication et mention de la délivrance du brevet:
**16.01.2019 Bulletin 2019/03**

(21) Numéro de dépôt: **09780912.3**

(22) Date de dépôt: **22.07.2009**

(51) Int Cl.:
***H02K 7/116*** *(2006.01)* ***H02K 1/22*** *(2006.01)*

(86) Numéro de dépôt international:
**PCT/EP2009/059407**

(87) Numéro de publication internationale:
**WO 2010/010110 (28.01.2010 Gazette 2010/04)**

(54) **MOTEUR A ROTOR EXCENTRIQUE**

MOTOR MIT EXZENTRISCHEM ROTOR

MOTOR WITH ECCENTRIC ROTOR

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **22.07.2008 FR 0854985**

(43) Date de publication de la demande:
**27.04.2011 Bulletin 2011/17**

(73) Titulaire: **Conductix Wampfler France**
**92700 Colombes (FR)**

(72) Inventeur: **LACOUR, Gilles**
**F-01300 Belley (FR)**

(74) Mandataire: **Regimbeau**
**20, rue de Chazelles**
**75847 Paris Cedex 17 (FR)**

(56) Documents cités:
**DE-A1- 19 923 877**
**DE-A1-102006 017 713**
**SU-A1- 1 742 953**
**US-A- 2 703 370**
**US-A- 3 770 997**
**US-A- 5 672 923**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

Printed by Jouve, 75001 PARIS (FR)

EP 2 313 960 B1

## Description

L'invention concerne les machines tournantes électriques à rotor excentrique.

Dans le domaine des moteurs électriques sans balai (« *brushless* » en terminologie anglo-saxonne), certains ont été développés avec un rotor excentré.

L'énergie électromagnétique engendrée au niveau du stator par l'alimentation du moteur électrique se transmet sans contact au rotor. La vitesse du moteur est généralement commandée par la fréquence de l'alimentation électrique du moteur.

Dans le cas d'un moteur à rotor excentrique, l'axe principal du rotor est soit laissé en libre circulation dans le creux défini par le stator, soit agencé de telle manière qu'il définit une trajectoire circulaire à l'intérieur du creux défini par le stator (agencement dit en « porte-satellite »). Généralement, le rotor comprend des moyens destinés à le faire rouler à l'intérieur du creux du stator. Ainsi, une alimentation successive des bobines du stator autour du creux provoque une attraction du rotor pourvu soit de pôles définis par un agencement d'aimants permanents, soit d'électroaimants.

Des avantages à utiliser un rotor excentrique peuvent être les suivants :

- Le moteur utilise de manière générale moins de bobines qu'un moteur électrique traditionnel. Cela implique alors une réduction des coûts de production et de maintenance du moteur.
- Le roulement du rotor au sein du creux du stator est provoqué par la force d'attraction magnétique des bobines du stator sur les pôles du rotor et cette attraction est d'autant plus importante que le rayon du rotor est proche du rayon du circuit fermé du stator. La rotation du rotor provenant d'une force d'attraction magnétique, cela permet d'augmenter la puissance transmise au rotor.
- Le roulement du rotor au sein du stator provoque une réduction intrinsèque de la vitesse de rotation du rotor autour de son axe (en valeur absolue) par rapport à la vitesse de rotation de l'énergie électromagnétique autour du stator. En effet, un calcul utilisant la formule de Willis donne un rapport r entre la vitesse de rotation du rotor autour de son axe principal et la vitesse de rotation de l'énergie électromagnétique du stator (vitesse à laquelle l'alimentation successive des pôles définit un tour complet autour du creux du stator), r étant égal au rapport suivant :

$$r = \frac{nr - ns}{nr}$$

avec :

nr = nombre de pôles du rotor ; et
ns = nombre de pôles du stator ;

Dans un cas répandu où le nombre de pôles du rotor est proche du nombre de pôles du stator, par exemple, ns = nr + 1, on trouve alors un rapport de réduction égal à :

$$\frac{-1}{nr}$$

On peut ainsi, dans des applications à vitesse de rotation réduite, se passer d'un réducteur (avec les pertes associées).
De plus, ce rapport se reporte directement sur le couple. En effet, la puissance électromagnétique transmise au rotor (moins les pertes) étant égale au couple mécanique multiplié par la vitesse de rotation du rotor, une diminution importante de la vitesse de rotation entraîne une augmentation importante du couple.

De manière générale, on choisit ainsi les moteurs à rotor excentrique pour des utilisations à rotation lente mais à couple important et régulier.

Le document EP 0 565 746 décrit un moteur à rotor excentrique comprenant au stator une pluralité d'électro-aimants disposés en réseau pour former un espace fermé, chaque électro-aimant (pôle) étant positionné en série avec les autres pôles afin de définir un chemin fermé, le rotor étant constitué d'un aimant permanent, un pôle duquel est agencé de manière à rouler le long du chemin fermé, et des moyens pour charger sélectivement les électro-aimants pour attirer et/ou repousser l'aimant permanent du rotor afin de faire rouler celui-ci.

Le document JP 11 178 312 décrit un moteur à rotor excentrique comprenant un stator avec une pluralité d'électro-aimants disposés le long d'un chemin fermé définissant un creux tel que décrit précédemment.

On connaît également dans ce domaine le document SU1742953 qui correspond à une machine suivant le préambule de la revendication 1. Le document US5672923 décrit une machine à rotor excentrique sans pôles alternativement répartis circonférentiellement, mais pour laquelle il est prévu de positionner un élément d'équilibrage inséré entre le rotor et le stator. Le document DE102006017713 décrit une machine ayant un rotor souple sur lequel sont montés des pôles magnétiques.

Le moteur comprend également un rotor comprenant une pluralité d'aimants, par exemple, permanents, tels que le rotor roule le long du chemin fermé du stator sur ces pôles d'aimants permanents en fonction de l'alimentation successive des électro-aimants du stator.

Sur un plan mécanique, le rotor et le stator peuvent comprendre des pistes de roulement, de façon à ce que le contact de roulement entre le rotor et le stator s'effectue au niveau desdites pistes de roulement.

Le rotor et le stator peuvent également comprendre des moyens d'engrènement afin de garantir un roulement sans glissement du rotor, c'est-à-dire que la vitesse relative au point de contact entre le stator et le rotor est continuellement nulle.

Afin de transmettre la rotation du rotor sur une sortie constituée par un arbre tournant non excentrique, il peut être prévu une transmission par doigts, les doigts étant solidaire de l'arbre de sortie et étant entraînés par un élément monté coaxialement avec le stator et solidaire du rotor de façon à ce que ces doigts placés dans des lumières correspondantes soient entraînés, entrainant l'arbre de sortie en rotation.

Un but de l'invention est de proposer un moteur à rotor excentrique amélioré par rapport à l'état de l'art.

A cet effet, l'invention propose une machine électrique tournante à rotor excentrique selon la revendication indépendante 1.

Des formes de réalisation avantageuses de l'invention comprennent au moins l'une des caractéristiques suivantes :

- le stator comprend une piste de roulement à l'intérieur de laquelle une piste de roulement du rotor est apte à rouler,
- le stator comprend au moins une piste de roulement à l'intérieur de laquelle une piste de roulement du rotor est apte à rouler, les pistes de roulement présentant un profil complémentaire apte à créer une force de contre-réaction axiale,
- les pôles du stator comprennent des bobinages, et en outre des moyens de pilotage de l'alimentation des bobinages en fonction d'une information de position du rotor,
- ladite information de position du rotor est fournie par un capteur angulaire,
- la machine comprend également un dispositif d'engrènement entre le rotor et le stator afin de garantir un roulement sans glissement du rotor dans le stator,
- l'arbre est assujetti au rotor par système de transmission à doigts d'entraînement coopérant avec des lumières de taille supérieure à la section des doigts,
- lesdites lumières comprennent chacune un dispositif de roulement mécanique,
- chaque doigt d'entraînement comprend une surface d'adhérence comprenant un joint, sur une surface d'appui sur laquelle le roulement mécanique correspondant s'appuie,
- l'arbre est assujetti au rotor par système de transmission à double engrenage,
- le stator possède un nombre pair de pôles et dont le sens des bobinages du stator sont inversés entre deux pôles successifs, et tous reliés en série,
- le stator possède un pôle de plus que le rotor,
- le rotor est traversé longitudinalement par un alésage, il est traversé par un arbre creux dont le diamètre extérieur est inférieur au diamètre de l'alésage diminué de l'écart entre les diamètres du stator et du rotor.

D'autres caractéristiques, buts et avantages de la présente invention apparaîtront à la lecture de la description détaillée qui va suivre, au regard des dessins annexés, donnés à titre d'exemples non limitatifs et sur lesquels :

- la figure 1 est une coupe longitudinale d'un moteur à rotor excentrique selon une réalisation de l'invention,
- la figure 2 est une coupe transversale du moteur de la figure 1,
- la figure 2b représente de manière schématique un pôle du rotor ainsi qu'un pôle du stator,
- la figure 3 est une représentation détaillée d'un contrepoids d'un moteur à rotor excentrique selon une réalisation de l'invention,
- la figure 4 est une représentation en perspective cavalière du moteur des figures 1 et 2,
- la figure 5 est une coupe transversale d'un moteur à rotor excentrique selon une réalisation de l'invention,
- la figure 6 est une coupe longitudinale d'un moteur à rotor excentrique selon une réalisation de l'invention,
- la figure 7 est un diagramme schématisé des moyens de commande d'un moteur à rotor excentrique selon une réalisation de l'invention,
- la figure 8 est une coupe détaillée des pistes de roulement d'un moteur à rotor excentrique selon une réalisation de l'invention,
- les figures 9a et 9b sont des coupes transversales simplifiées d'un moteur à rotor excentrique selon une réalisation de l'invention,
- les figures 10a à 10c sont des coupes transversales simplifiées d'un moteur à rotor excentriques selon une réalisation de l'invention, le stator comprenant un nombre impair de pôle,
- les figures 11a à 11c sont des coupes transversales simplifiées d'un moteur à rotor excentriques selon une réalisation de l'invention, le stator comprenant un nombre pair de pôle,
- la figure 12 est une coupe transversale simplifiée d'un moteur à rotor excentriques selon une réalisation de l'invention, le stator comprenant un nombre pair de pôle.

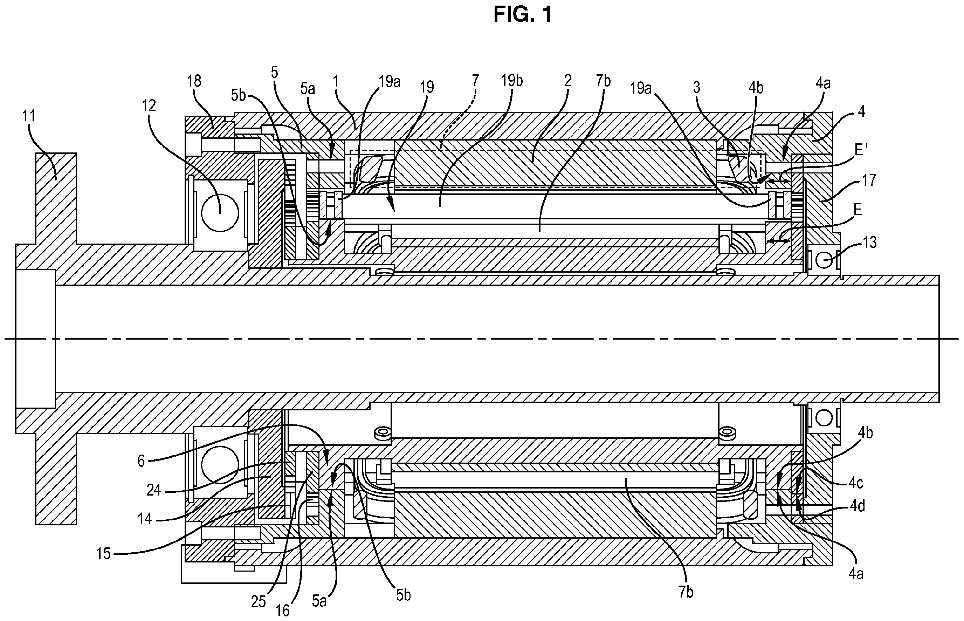

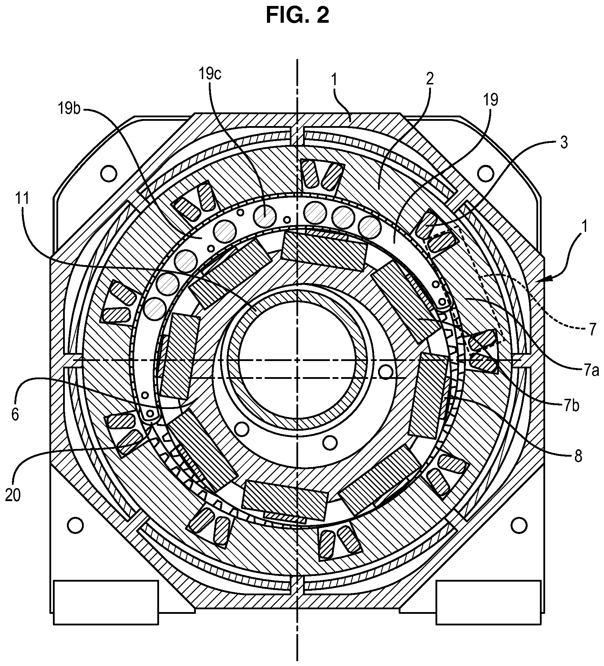

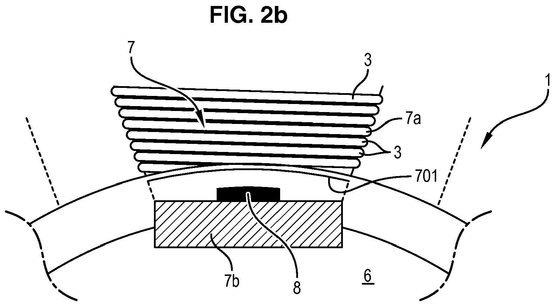

En référence aux figures 1 et 2, un moteur à rotor excentrique selon une forme de réalisation de l'invention comprend une base de stator 1 présentant avantageusement des ailettes pour la ventilation et le refroidissement du moteur ; le stator comprend également une carcasse 2, préférentiellement en acier doux ; le stator comprend également des électro-aimants 7 composés d'extensions radiales 7a de la carcasse 2 et d'un bobinage 3 enroulé radialement autour des extensions 7a, de telle sorte que l'alimentation électrique du bobinage 3 engendre un champ magnétique porté par les extensions 7a (on prévoit d'ailleurs un feuilletage et un laminage de ces extensions afin de limiter les pertes fer du moteur, à savoir les pertes par hystérésis et par courant de Foucault). Bien évidemment, le champ magnétique du moteur peut être engendré par toute autre solution connue de l'état de l'art, comme un bobinage axial. Les pôles du stator sont situés radialement autour d'un creux ou cavité de section circulaire. Le stator comprend de plus des pistes de roulement 4a et 5a de part et d'autre de l'axe longitudinal du stator, portées par des flasques 4 et 5 encastrés à la base du stator 1. Le moteur comprend également un rotor 6 d'un diamètre inférieur au diamètre de la cavité du stator, qui comporte deux pistes de roulement 4b et 5b dont la largeur E est sensiblement égale à la largeur E' des pistes de roulement du stator 4a et 5a et qui sont sensiblement alignées respectivement sur les pistes de roulement du stator 4a et 5a. Le rotor comprend des aimants fixes 7b répartis radialement autour de sa périphérie. Avantageusement, ces aimants sont des aimants permanents ; leur nombre est inférieur à celui des pôles du stator ; leur nombre est préférentiellement pair et ils sont répartis de façon à intercaler un pôle sud entre deux pôles nord. Préférentiellement, le stator comprend un nombre de pôles compris entre 3 et 21 et le rotor comprend un nombre de pôles compris entre 2 et 20. Il est à noter que le fait d'utiliser 3 pôles au stator (ou tout multiple de 3) permet d'utiliser directement une alimentation triphasée pour l'alimentation de la machine à rotor excentrique, permettant une réduction des coûts de fabrication et de maintenance. De plus, pour effectuer une variation de fréquence de l'alimentation, il suffit d'utiliser un variateur de fréquence triphasé disponible dans le commerce parfois à bas coût, ce qui réduit les coûts de fabrication et de maintenance.

Comme décrit précédemment, l'alimentation successive des électro-aimants du stator attire, selon leur polarité, les aimants permanents du rotor, forçant ainsi le rotor à rouler au niveau des pistes de roulement.

La commande de l'alimentation des bobinages du stator est telle que le couple engendré par l'attraction des aimants du rotor soit sensiblement constant. A cet effet, il est prévu un dispositif de pilotage de l'alimentation des bobinages pouvant comprendre un capteur de la position angulaire du rotor.

Le moteur comprend un arbre de sortie 11 avantageusement creux afin de permettre le passage éventuel d'un câble, d'un tuyau ou d'un autre arbre porteur d'un autre mouvement. Ce creux permet également de diminuer l'inertie de l'arbre de sortie. Cet arbre de sortie est monté à rotation par rapport au stator grâce à des roulements 12 et 13, montés sur des porte-roulements 17 et 18, eux-mêmes liés aux flasques 4 et 5. L'arbre de sortie s'étend à travers la cavité du stator en direction axiale et le rotor circule autour de l'arbre de sortie. La transformation du roulement du rotor en rotation de l'arbre de sortie 11 est effectuée à l'aide d'un système de double engrenage. Ce système comprend, au niveau du stator, un engrenage 16 qui est un engrenage fixe solidaire du flasque 5 et dont le nombre de dents est noté $Z_{16}$. Cet engrenage entraîne un engrenage 25 solidaire du rotor 6 et engrenant dans l'engrenage 16. L'engrenage 25 comprend $Z_{25}$ dents. Le rotor comprend un deuxième engrenage de sortie 24 solidaire du rotor et comprenant $Z_{24}$ dents. L'engrenage extérieur de sortie 24 engrène avec un engrenage 15 solidaire de l'arbre de sortie 11 en étant fixé à lui au travers d'un support 14 solidaire de l'arbre de sortie 11. La vitesse de rotation de l'arbre de sortie 11 est liée à la vitesse de rotation du rotor 6 par le rapport $r_2$ entre la vitesse de rotation de l'arbre 11 et la vitesse de rotation du rotor :

$$r_2 = \frac{Z_{25} * Z_{24}}{Z_{16} * Z_{15}}$$

Donc le rapport $r_3$ entre la vitesse de rotation de l'arbre de sortie et la vitesse angulaire de l'alimentation du stator est de :

$$r_3 = \frac{Z_{25} Z_{24}}{Z_{16} Z_{15}} \times \frac{1}{ns}$$

Il est prévu en outre, un engrenage 4c solidaire du rotor 6 et un engrenage 4d solidaire de l'arbre de sortie 11, l'engrènement entre les engrenages 4c et 4d permettant de garantir un roulement sans glissement du rotor par rapport au stator au niveau des pistes de roulement permettant ainsi de garantir l'alignement des pôles.

Bien évidemment, le déplacement excentrique du rotor provoque un balourd important qui lui-même est susceptible de provoquer des vibrations du moteur. Afin de compenser ce balourd, il est prévu, selon une forme de réalisation de l'invention, l'insertion entre le rotor et le stator d'un contrepoids 19. Avantageusement, le contrepoids 19 possède une forme de croissant de lune (ou demi-lune) qui, au niveau de son côté intérieur, épouse la périphérie du rotor et, au niveau de son côté extérieur, épouse la périphérie du stator. Le contrepoids comprend un corps 19b et deux parties d'extrémités 19a, préférentiellement situées au niveau des pistes de roulement 4a et 5a. Avantageusement, le contrepoids comprend des évidements 19c destinés à régler son poids par exemple en les remplissant ou non d'un matériau d'appoint. Il est à noter que le contrepoids 19 est chassé par la rotation du rotor et tourne le long du chemin fermé du stator en sens inverse de la rotation du rotor, et possède à cet effet deux séries de galets 20, l'une pour son roulement sur le stator et l'autre pour son roulement sur le rotor. Il est à noter également qu'un tel contrepoids n'a aucune liaison physique fixe avec le reste de la machine, ce qui permet à l'arbre de sortie de s'étendre de manière traversante d'une extrémité à autre du stator.

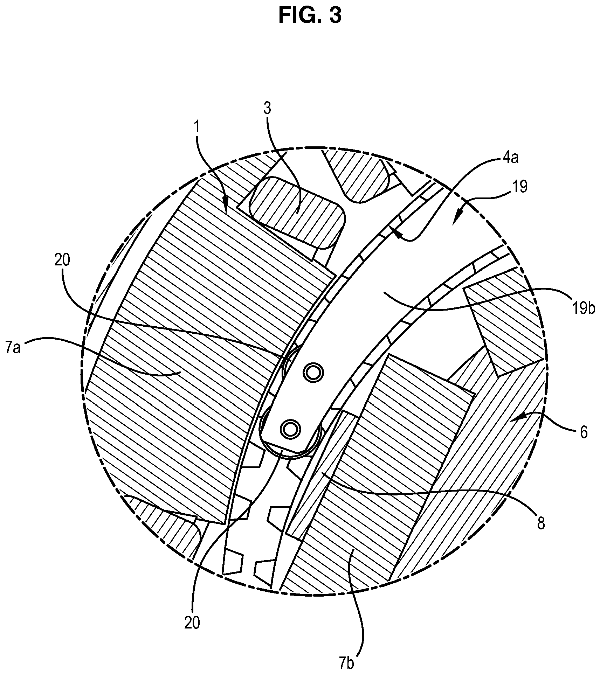

En référence à la figure 3 montrant plus précisément une extrémité 19b du contrepoids 19, cette extrémité comprend une paire de galets 20 roulant respectivement sur le stator et sur le rotor, le long des pistes de roulement 4a et 5a. Ainsi, le roulement du rotor le long du chemin fermé du stator a tendance à repousser le contrepoids en agissant sur le galet en contact avec lui, celui-ci étant chassé en roulant sur le stator via l'autre galet.

L'ensemble rotor 6/contrepoids 19 présente ensemble des masses équilibrées, avec un centre de gravité (barycentre) situé sensiblement sur l'axe principal du stator.

De retour à la figure 2, il est à noter qu'au niveau de la zone d'interaction magnétique entre les pôles du rotor et les pôles du stator, le développé des pôles du rotor 7b et le développé des pôles du stator 7a le long de leurs circonférences respectives ont sensiblement la même longueur. En référence à la figure 2b, il est noté que le pôle du rotor n'est pas curviligne. En effet, le pôle du rotor comprend un aimant permanent 7b de section généralement rectangulaire fixé au rotor par une plaque d'attache 8 et saillant par rapport à la carcasse du rotor. Dans ce cas, on observe que le développé circonférentiel 701 du pôle 7b du rotor est sensiblement de même longueur que le développé circonférentiel du pôle du stator.

Les pôles restent face à face lors du mouvement de rotation excentrique. L'alternance du courant dans les bobinages provoque la rotation du rotor sur lui-même et autour de l'arbre de sortie 11.

Cette configuration des développés des pôles présente plusieurs avantages. En particulier, le couplage magnétique entre rotor et stator est optimisé, et les composantes tangentielles des forces mises en jeu, susceptible de faire glisser le rotor par rapport au stator sont minimisées. Le couple est sensiblement constant sans avoir recours à des formes de pôles élaborées comme dans les moteurs à reluctance variable ou à un grand nombre de pôles comme dans les moteurs asynchrones à fort couple.

En outre, le fait d'avoir des développés sensiblement de la même longueur permet de ne pas être astreint à une seule forme géométrique des pôles. Ainsi les pôles ne sont pas forcément cylindriques, comme sur la figure 2b sur laquelle les pôles du rotor sont géométriquement rectangulaires.

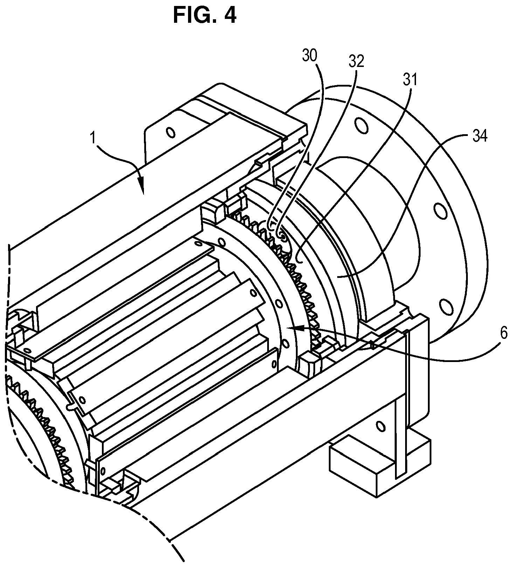

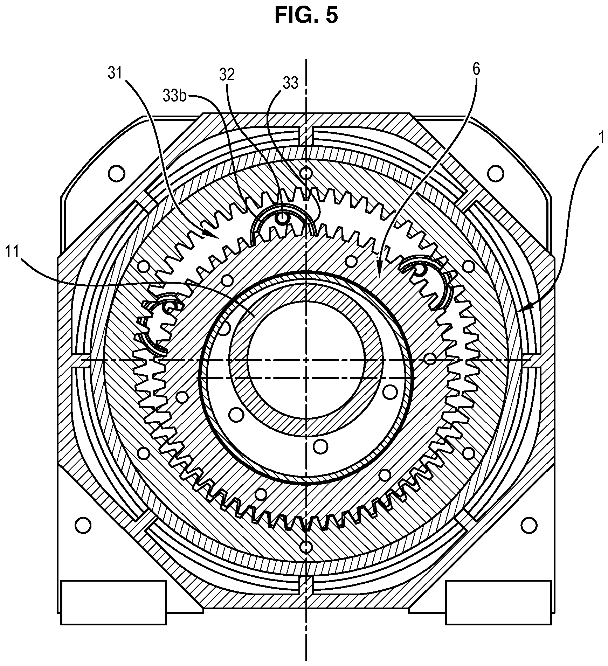

En référence aux figures 4 et 5, la transmission de la rotation du rotor sur l'arbre de sortie 11 est effectuée à l'aide d'une série (préférentiellement six) de doigts d'entraînement 32. A cet effet, le rotor comprend une plaque d'entraînement comprenant une série correspondante de lumières 30, chaque lumière étant préférentiellement de forme cylindrique, et comprenant un roulement d'appui 33. Ce roulement permet d'annuler le frottement du doigt sur le pourtour de l'alésage de la lumière, évitant ainsi une usure du doigt. Avantageusement, chaque doigt d'appui 32 comprend extérieurement au niveau d'une surface d'adhérence un joint (préférentiellement torique inséré dans une gorge circonférentielle du doigt) d'adhérence 33b permettant au doigt d'avoir une meilleure adhésion au niveau du point de contact avec le roulement d'appui. L'utilisation d'un joint permet également d'ajouter une fonction d'amortissement évitant ainsi les chocs mécaniques entre le doigt d'entraînement et le roulement d'appui (ces chocs mécaniques peuvent en effet conduire à une détérioration du dispositif). Il est à noter qu'un tel joint permet d'éviter de petits glissements entre le doigt et le roulement d'appui ; empêchant ainsi d'une détérioration par frottement (en termes anglo-saxon « fretting corrosion »).

L'arbre de sortie 11 est quant à lui solidaire d'un porte-doigts 34 comportant les doigts d'entraînement 32. Le porte-doigts 34 et la plaque d'entraînement 31 sont agencés de telle manière à ce que chaque doigt 32 du porte-doigt 34 soit situé à l'intérieur d'une lumière correspondante de la plaque d'entraînement 31. Inversement, le porte doigt peut également être agencé de manière à être solidaire du rotor et la plaque d'entraînement solidaire à l'arbre de sortie.

La rotation du rotor entraîne en rotation la plaque 31 et les lumières 30, qui à leur tour entraînent les doigts 32 et le porte-doigts 34, ce qui provoque la rotation de l'arbre de sortie 11. L'axe du rotor 6 se déplaçant lors de son roulement, les lumières sont conçues de manière à permettre le mouvement correspondant des doigts en leur sein ; plus précisément, il est à noter non seulement que chaque doigt est de diamètre inférieur au diamètre de la lumière correspondante mais de plus que l'écart entre le diamètre du doigt et le diamètre de la lumière correspond à l'écart de diamètre entre le rotor et le stator du à l'excentricité. Il est à noter de surcroît, afin d'éviter l'hyperstaticité dûe à l'interaction de la série de doigts avec les lumières que l'écart entre le diamètre du doigt et le diamètre de la lumière est légèrement supérieur à l'écart de diamètre entre le rotor et le stator du à l'excentricité.

- Le roulement d'appui 33, ainsi que le joint torique 33b, ont pour fonction de permettre une meilleure prise avec chaque doigt d'entraînement 32.

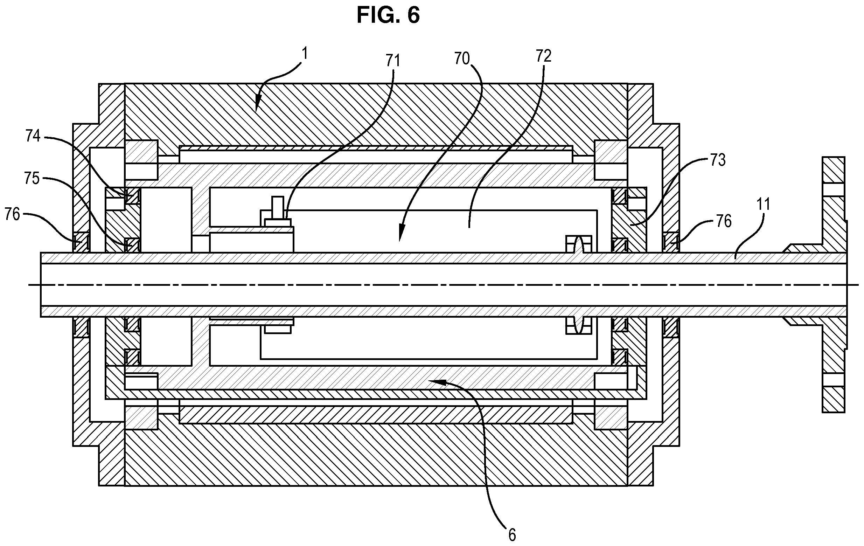

En référence à la figure 6, il est prévu pour la transmission de la rotation du rotor 6 à l'arbre de sortie 11 un système de cardan 70. A cet effet, il est prévu une liaison 71 du cardan 70 sur le rotor. Le cardan comprenant un arbre 72 et entraînant en rotation l'arbre 11 par l'intermédiaire d'une liaison 71.

Avantageusement, il est prévu de munir le moteur de porte-roulements excentriques 73 afin de garantir une rotation indépendante entre le rotor, en rotation excentrique par rapport au stator et l'arbre de sortie 11 à l'aide des roulements 75 (roulements supportant l'arbre de sortie 11) et les roulements 74 (roulements supportant le rotor). Ainsi la combinaison des porte-roulements excentriques 73, et des roulements 74, 75 permet au rotor d'avoir un mouvement excentrique atour de l'arbre de sortie 11 sans perturber la rotation de l'arbre. L'arbre est en liaison pivot par rapport au stator 1 grâce aux roulements 76.

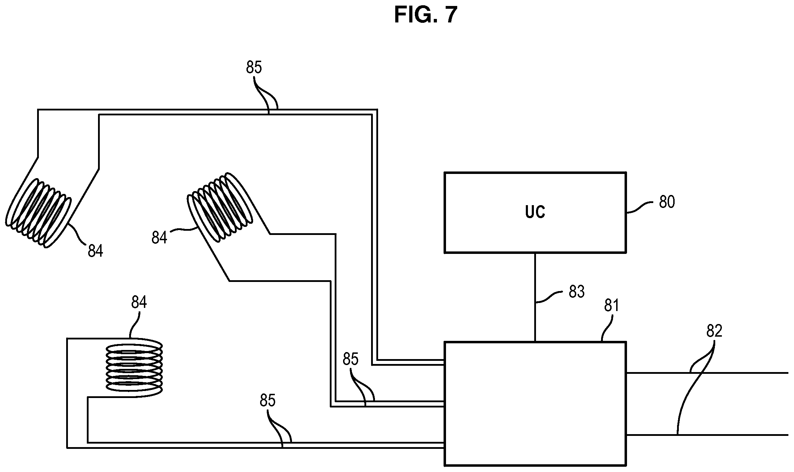

En référence à la figure 7, la commande de l'alimentation électrique des bobinages de stator est effectuée par une unité de pilotage 80 composée par exemple d'un processeur, d'une mémoire de travail et d'une pluralité d'entrées/sorties (analogiques et/ou numériques). Avantageusement, cette unité de contrôle est un microcontrôleur ou un ordinateur comprenant une extension (carte, périphérique,...) d'entrée/sortie appropriée.

Les sorties de commande de l'unité 80 sont transmises à une unité de commutation 81. Cette unité de commutation 81 est reliée aux bobinages 84 (ici au nombre de trois) par les conducteurs d'alimentation 85, et reliée également à une source d'alimentation 82. L'unité de commutation 81 peut être agencée sur le moteur ou à l'extérieur du moteur. L'alimentation 82 peut être continue ou alternative du type monophasé ou polyphasé (préférentiellement triphasé), avec une tension typiquement comprise préférentiellement entre 50 et 400 Volts.

Avantageusement, l'unité de commutation 81 comprend des moyens de redressement si la source d'alimentation 82 est alternative, des moyens de lissage et de régulation de la tension et des interrupteurs commandés, préférentiellement des transistors et plus particulièrement encore des transistors du type IGBT.

Il peut être prévu plusieurs stratégies de pilotage de l'alimentation des bobinages 84.

Une première stratégie consiste à gérer l'alimentation des bobinages à partir d'un ou plusieurs capteur(s) agencé(s) sur le rotor, afin de connaître sa position.

Une autre stratégie consiste à mesurer le courant circulant dans des bobinages et par analyse du rapport courant/tension, à déterminer quel bobinage correspond à l'approche d'un aimant du rotor au niveau de ce bobinage. Ainsi il est possible de connaître de manière fiable, la position du rotor au sein du stator. Il est alors possible de faire fonctionner le moteur en mode contrôle de couple.

Concernant l'alimentation des électroaimants, différentes solutions peuvent être envisagées. Elles ont en commun d'alimenter les bobinages différemment de part et d'autres du point de contact (ou ligne de tangence) entre le rotor et le stator. Il est à noter que le terme « point de contact » ne désigne pas forcément un point de contact physique entre le rotor et le stator. Notamment, dans le cas où le stator et le rotor ne sont en contact physique qu'au niveau des pistes de roulement (ce qui garantit la conservation des matériaux au niveau des pôles), le terme « point de contact » concerne le point au niveau duquel le stator et le rotor sont le plus proche. Il correspondant d'ailleurs de manière axiale aux points de contact physique du rotor et du stator au niveau des pistes de roulement. Les pôles situés après ce point de contact dans le sens du mouvement doivent repousser le rotor alors que les pôles situés en avant doivent attirer les pôles du rotor. Si le point de contact est entre deux pôles du stator, ces pôles sont de même polarité car les pôles du rotor sont alternés et les forces doivent être de direction opposées. Quand dans le mouvement du rotor le point de contact passe par le plan de symétrie du premier pôle rencontré dans le mouvement la commutation a lieu, le courant change de sens dans ce pôle. Les pôles voisins gardent leur polarité alternée. Le ou les pôles diamétralement opposés suivant que le nombre de pôles est pair ou impair voient leur alimentation modifiée.

Une première solution consiste à alimenter individuellement chaque bobine dans le cas d'un nombre de pôles pairs ou impairs au stator.

Une autre solution dans le cas où le nombre d'électroaimants au stator est pair consiste à alimenter simultanément l'ensemble des bobines reliées en série avec un point d'alimentation situé entre chaque bobine. Le sens d'enroulement est inversé entre deux bobinages voisins. Les électroaimants peuvent alors être alimentés de manière à former le long du chemin fermé du stator une succession de pôles Nord et de pôles Sud de part et d'autre du plan passant par l'axe du stator Du point de contact avec une alimentation continue raccordée sur des points d'alimentation diamétralement opposés. Ensuite, afin de faire rouler le rotor, il est prévu de décaler d'un point d'alimentation l'ensemble des électroaimants, formant ainsi une nouvelle succession de pôles Nord et de pôles Sud symétriquement à un plan qui a tourné. Cette opération est continuellement renouvelée afin de faire rouler le rotor au sein du stator. L'inversion de polarité provoque une répulsion du pôle du rotor qui est à proximité d'un pôle du stator et une attraction du pôle suivant (dans le sens de roulement du rotor) du rotor. On rappellera ici que la concordance des pôles de stator et de rotor est garantie par le système d'engrenages décrit plus haut, conjointement avec l'égalité des longueurs développées des pôles de stator et de rotor telle que décrite précédemment. C'est cette égalité qui rend le couple sensiblement constant avec une alimentation à courant constant.

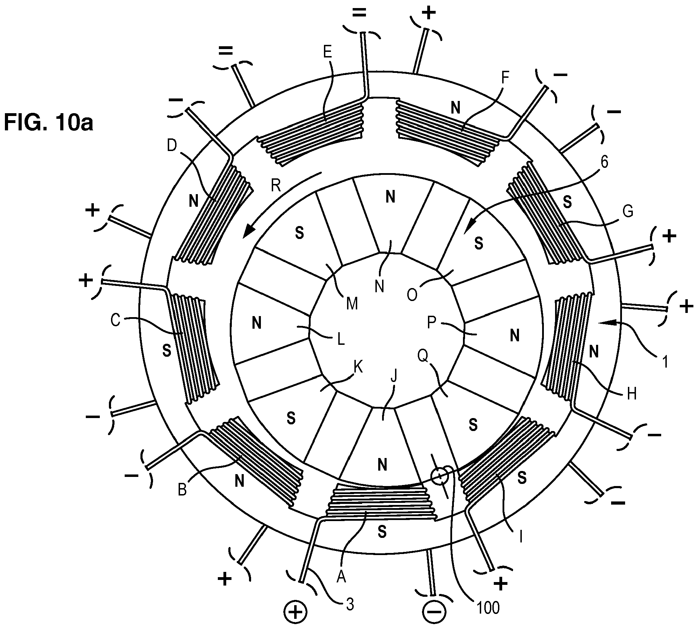

En référence aux figures 10a à 10c, un exemple d'alimentation individuelle des pôles est présenté. Dans ce cas, le stator comprend neuf pôles A à I et le rotor huit pôles J à Q. Les trois figures présentent trois positions successives du rotor par rapport au stator et l'alimentation des bobines des pôles du stator correspondante. Ces trois figures présentent le « passage » du rotor sur un pôle du stator (le pôle A) suivant un sens de rotation R mais peut être naturellement transposé à l'ensemble des pôles du stator.

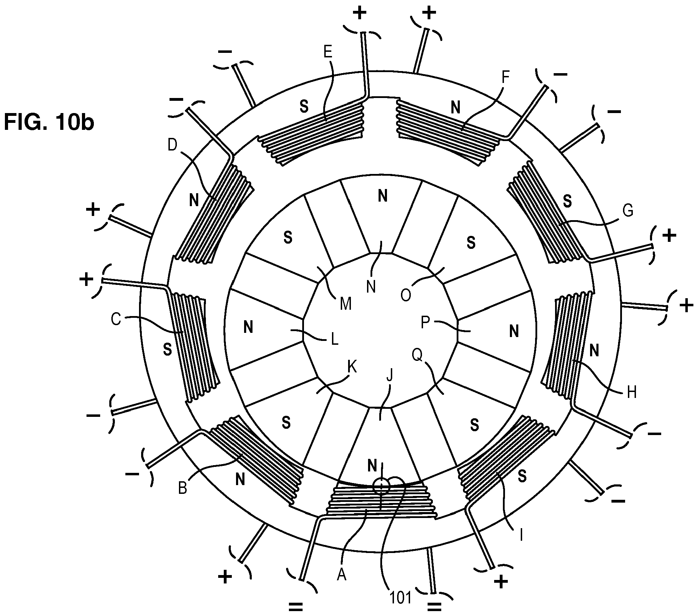

La figure 10a présente donc un agencement du rotor 6 et du stator 1 tel que le point de contact 100 entre le rotor et le stator se situe en amont du pôle A. L'ensemble des pôles du stator sont alimentés alors de sorte que le pôle A soit de polarité Sud et donc attirant le pôle J du rotor de polarité Nord (N) et se situant à proximité du pôle A. Pour polariser le pôle A, la bobine 3 a été alimentée dans un sens de manière à ce que le pôle présente une polarité Sud. Le pôle B est polarisé de manière inverse de sorte qu'il présente une polarité Nord attirant ainsi le pôle K du rotor de polarité Sud. De la même manière les pôles C et D du stator sont alimentés de manière à présenter respectivement une polarité Sud et Nord permettant d'attirer respectivement les pôles L et M du rotor. Le pôle E du rotor n'est pas alimenté et ne présente donc pas de polarité. Les bobines suivantes F à I sont alimentées de façon à repousser respectivement les pôles N à Q. L'ensemble des forces d'attraction et de répulsion agissent ainsi de manière à accompagner la rotation du rotor 6 autour du point de contact 100. La figure 10b présente une position suivante du rotor 6 par rapport au stator 1 tel que le point de contact 101 entre les deux se situe au niveau du pôle A. Les bobines des pôles B à D sont alimentées de manière à attirer les pôles K à M du stator. Les bobines des pôles E et F sont alimentées de manière à présenter respectivement un pôle S et N de sorte que le pôle N du rotor soit attiré par le pôle E du stator et repoussé par le pôle F du stator. Les bobines des pôles G à I sont alimentées de façon à repousser les pôles O à Q du rotor. L'ensemble des forces d'attraction et de répulsion agissent ainsi de manière à accompagner la rotation du rotor 6 autour du point de contact 101.

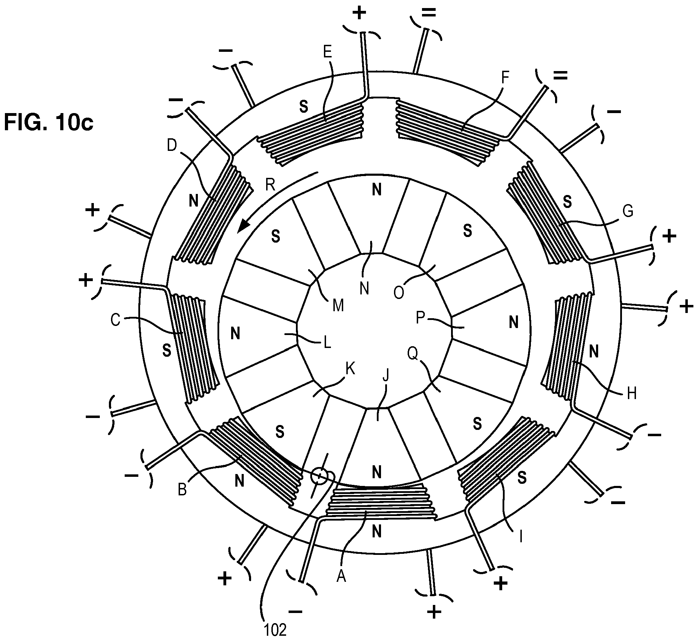

La figure 10c présente une situation suivante dans laquelle le point de contact 102 entre le rotor 6 et le stator 1 se situe entre les bobines A et B. L'alimentation des bobines des pôles du stator est donc la même que celle de la figure 10a mais décalée d'un pôle selon le sens inverse du sens de rotation R du rotor 6.

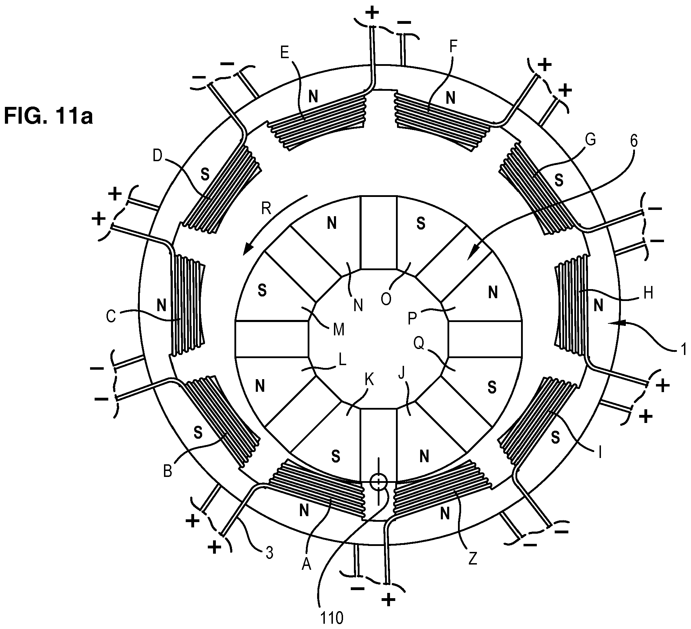

En référence aux figures 11a à 11c, un exemple d'alimentation individuel des pôles est présenté. Le stator comprend neuf pôles A à I et Z et le rotor huit pôles au rotor J à Q. Les trois figures présentent trois positions successives du rotor par rapport au stator et l'alimentation des bobines des pôles du stator correspondante. Ces trois figures présentent le « passage » du rotor sur un pôle du stator (le pôle A) suivant le sens de rotation R mais peut être naturellement transposé à l'ensemble des pôles du stator.

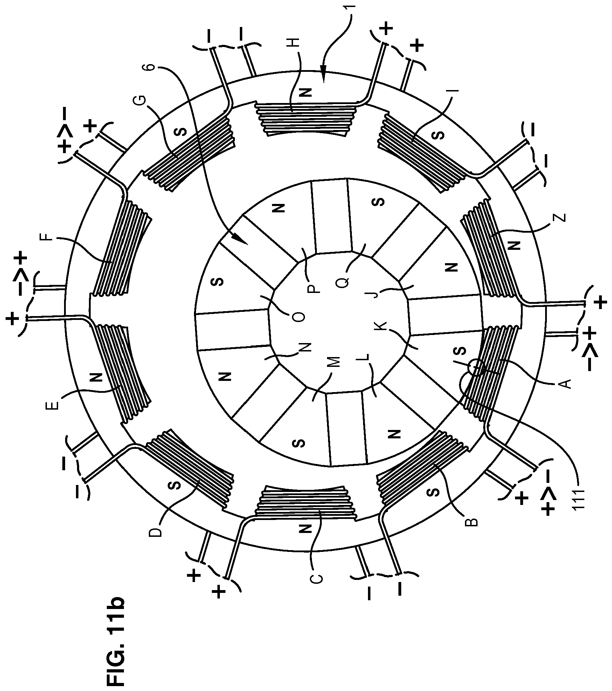

La figure 11a présente donc un agencement du rotor 6 et du stator 1 tel que le point de contact 110 entre le rotor et le stator se situe en amont du pôle A. l'ensemble des pôles du stator sont alimentés alors de sorte que le pôle A soit de polarité Nord et donc attirant le pôle K du rotor de polarité Sud (S) et se situant à proximité du pôle A. Pour polariser le pôle A, la bobine 3 a été alimentée dans un sens de manière à ce que le pôle présente une polarité Nord. Le pôle B est polarisé de manière inverse de sorte qu'il présente une polarité Sud attirant ainsi le pôle L du rotor de polarité Nord. De la même manière les pôles C et D du stator sont alimentés de manière à attirer respectivement les pôles M et N du rotor. Le pôle E du rotor est alimenté de manière à présenter un pôle Nord afin de repousser le pôle N (de polarité Nord). Le pôle F du rotor est alimenté de manière à présenter un pôle Nord afin de attirer le pôle O (de polarité Sud). Les bobines des pôles G, H, I et Z sont alimentées de façon à repousser respectivement les pôles O, P Q et J. L'ensemble des forces d'attraction et de répulsion agissent ainsi de manière à accompagner la rotation du rotor 6 autour du point de contact 110. La figure 11b présente une position suivante du rotor 6 par rapport au stator 1 tel que le point de contact 111 entre les deux se situe au niveau du pôle A. Les bobines des pôles B à D sont alimentées de manière à attirer les pôles L à N du stator. Les bobines des pôles E et G sont alimentées de manière à présenter respectivement une polarité Nord et Sud. Les bobines des pôles H, I et Z sont alimentées de façon à repousser les pôles P, Q et K du rotor. Les bobines A et F étant en contact « direct » avec respectivement les pôles K et O du rotor, son alimentation est inversée de sens afin de permettre de passer d'une polarité Nord à Sud accompagnant ainsi le mouvement de rotation du rotor 6.

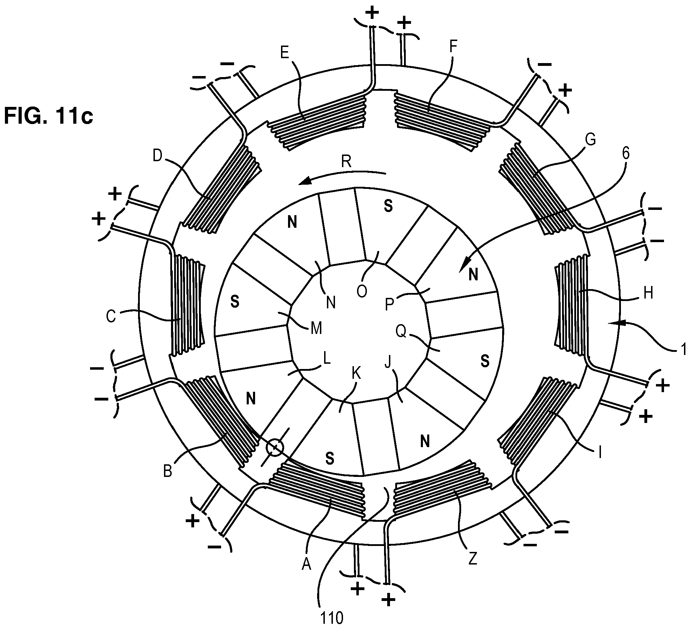

La figure 11c présente une situation suivante dans laquelle le point de contact 111 entre le rotor 6 et le stator 1 se situe entre les bobines A et B. L'alimentation des bobines des pôles du stator est donc la même que celle de la figure 11a mais décalée d'un pôle selon le sens inverse du sens de rotation R du rotor 6.

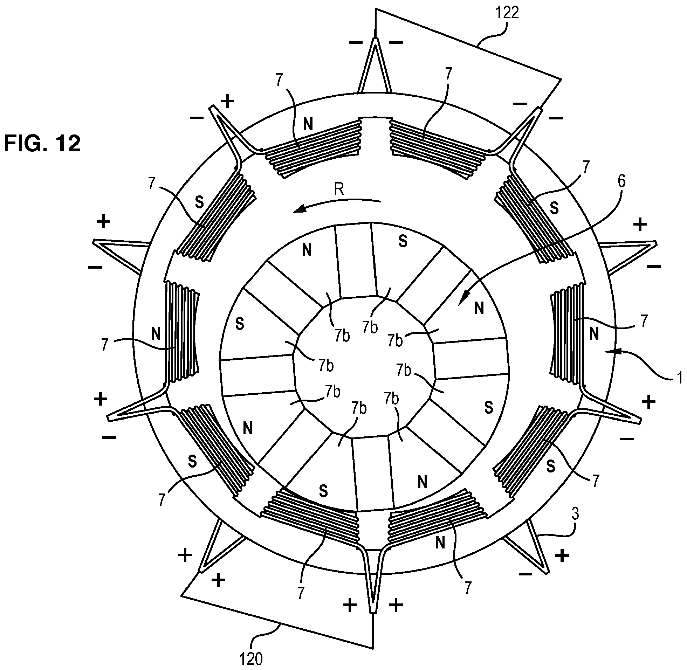

La figure 12 représente une réalisation possible de l'invention dont le stator comprend un nombre pair de pôles. L'ensemble des pôles reliés en série avec un point d'alimentation situé entre chaque bobine. Par rapport à un bobinage tel que présenté aux figures 11a à 11c, il est à noter le sens d'enroulement est inversé entre deux bobinages successives. Les pôles peuvent alors être alimentés de manière à former le long du chemin fermé du stator une succession de pôles Nord et de pôles Sud de part et d'autre du plan passant par l'axe du stator de la ligne de tangence avec une alimentation continue raccordée sur des points d'alimentation 120 et 122 diamétralement opposés. Il est à noter que les pôles diamétralement opposés sur lesquels sont branchés les points d'alimentation 120 et 122 sont court-circuités au même potentiel, désactivant ainsi toute polarité desdits pôles. Ensuite, afin de faire rouler le rotor, il est prévu de décaler d'un pôle l'alimentation formant ainsi une nouvelle succession de pôles Nord et de pôles Sud symétriquement à un plan qui a tourné. Cette opération est continuellement renouvelée afin de faire rouler le rotor au sein du stator.

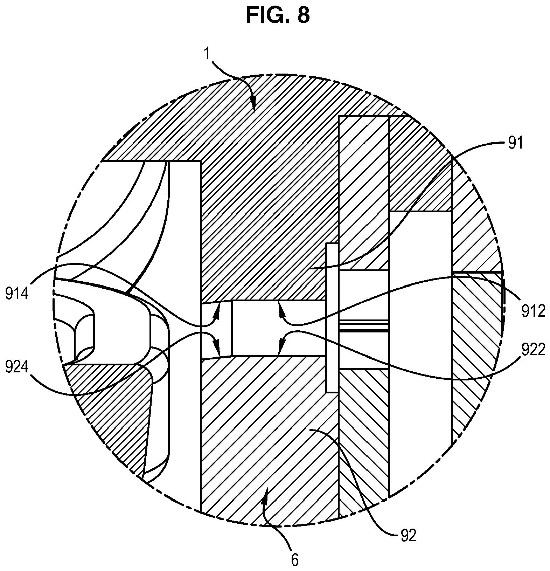

En référence à la figure 8 et selon une forme de réalisation avantageuse de l'invention, les pistes de roulement 91 du stator et les pistes de roulement correspondantes 92 du rotor présentent au niveau de leurs surfaces de roulement respectives 912 et 922 des parties obliques homologues 914 et 924 de façon à ce que les surfaces soient sensiblement complémentaires.

Ces parties obliques peut être réalisées sous forme d'une pente biseautée ou grâce à un profil de courbure approprié (hyperbolique, parabolique, ...).

Cette partie oblique permet de générer une force de réaction axiale dans permettant d'éviter que le rotor de puisse effectuer un déplacement axial lors de sa rotation

Un décalage axial du rotor augmente par la pente des pistes de roulement le diamètre de roulement d'une piste du rotor, son extrémité du coté du décalage avance un peu plus vite que l'autre la trajectoire en pas de vis sur les pistes de roulement provoque un mouvement du rotor dans le sens opposé au décalage initial. Une toute petite trajectoire oblique corrige rapidement la position du rotor, le jeu des engrenages suffit à donner un angle de correction suffisant.

Ainsi, de telles parties obliques assurent une régulation mécanique de la position axiale du rotor. Cette régulation permet en particulier d'éviter l'application d'efforts axiaux au niveau d'organes de support du rotor susceptibles de conduire à terme à des usures et/ou détériorations.

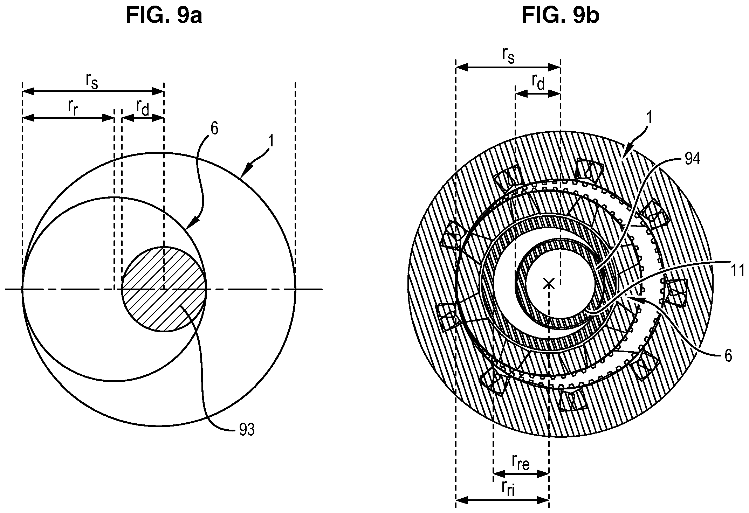

En référence aux figures 9a et 9b, on voit que de façon schématisée le stator comprend un espace interne de rayon $r_s$ dans lequel se déplace un rotor creux de rayon intérieur $r_r$ (l'épaisseur du rotor étant ici négligée). On comprend alors que la trajectoire décrite par le rotor lors de son roulement est telle que son espace intérieur circonscrit un espace de section circulaire 93 de rayon $r_d$. Cet espace est intéressant car il permet de faire passer, outre l'arbre de sortie, des éléments internes ou externes au moteur comme des câbles, etc. sans que ces éléments soient assujettis aux mouvements du rotor, qui circule autour de cet espace.

Pour garantir cet espace 93, le rapport des rayons du stator et du rotor doit donc être choisi sous les contraintes suivantes :

$$1 < \frac{r_s}{r_r} < 2$$

Bien évidemment le rapport doit être supérieur à 1 pour que le rotor puisse être inséré dans le creux du stator. De plus la relation qui lit les trois rayons est la suivante :

$$r_d = 2r_r - r_s$$

Cette relation est cependant simplifiée car en réalité, le rotor possède une certaine épaisseur et est donc caractérisée par un rayon interne $r_{ri}$ et un rayon externe $r_{re}$, l'espace étant défini alors par la trajectoire de la surface interne du rotor. En référence à la figure 9b, il est à noter que l'espace ainsi défini permet d'agencer un cylindre comme celui utilisé pour l'arbre de sortie du moteur. Ce cylindre peut être creux permettant de faire passer des éléments à l'intérieur comme expliqué précédemment. Les relations deviennent alors :

$$\frac{r_s}{r_{ri} + r_{re}} < 1 \quad \text{et} \quad r_d = r_{ri} + r_{re} - r_s$$

Les valeurs du rayon intérieur $r_s$ du stator et des rayons intérieur et extérieur $r_{ri}$ et $r_{re}$ du rotor sont dans ce cas choisis en fonction du rayon $r_d$ recherché pour cet espace 93.

La figure 9b illustre également le cas particulier où l'arbre de sortie 94 présente un rayon sensiblement égal à $r_d$ et où cet arbre est creux, permettant ainsi de faire passer des éléments à l'intérieur comme expliqué précédemment.

Toutefois, dans l'hypothèse où les longueurs développées des pôles de rotor et des pôles de stator sont égales, alors le nombre de pôle du stator et le nombre de pôles du rotor sont sensiblement proportionnels au rayon interne du stator et au rayon externe du rotor, et de telles formules peuvent être appliquées au rapport entre le nombre de pôle du stator ns et le nombre de pôle du rotor nr :

$$\frac{ns}{nr} < 2$$

Bien entendu, la présente invention n'est nullement limitée à la forme de réalisation décrite ci-dessus et illustrée sur les dessins, et l'homme du métier saura y apporter de nombreuses variantes et modifications.

Il est à noter que nous avons généralement décrit une réalisation de l'invention sous forme d'un moteur électrique, cependant l'homme du métier saura appliquer les caractéristiques décrites à toute autre machine tournante (par exemple à un générateur).

## Revendications

**1.** Machine électrique tournante à rotor excentrique comprenant un stator (1) et un rotor excentré (6), dans laquelle :

- le stator (1) comprend une pluralité de pôles magnétiques (7) répartis circonférentiellement afin de définir un espace fermé cylindrique,
- le rotor (6) est de forme généralement cylindrique avec un diamètre inférieur à celui dudit espace fermé et comprend une pluralité de pôles magnétiques (7) répartis circonférentiellement, le nombre de pôles magnétiques (7) du stator étant supérieur au nombre de pôles magnétiques (7b) du rotor,
- le rotor roule à l'intérieur de l'espace fermé,
- au niveau de la zone d'interaction électromagnétique entre le stator (1) et le rotor (6), le développé d'un pôle de stator (1) et le développé d'un pôle de rotor (6) sont de longueurs sensiblement égales,

la machine comprenant également un arbre (11) assujetti à la composante rotationnelle du rotor (6), machine **caractérisée en ce qu'**elle comprend en outre un contrepoids (19) en forme de croissant de lune formant avec le rotor (6) un ensemble dont le barycentre se trouve au voisinage de l'axe du stator (1).

2. Machine électrique tournante selon la revendication 1, dans laquelle le stator (1) comprend au moins une piste de roulement (4a, 5a) à l'intérieur de laquelle une piste de roulement (4b, 5b) du rotor (6) est apte à rouler, les pistes de roulement (4a, 5a, 4b, 5b) présentant un profil complémentaire apte à créer une force de contre-réaction axiale.

3. Machine électrique tournante selon la revendication 1 ou 2, dans laquelle les pôles (7) du stator (4) comprennent des bobinages (7a), et comprenant en outre des moyens de pilotage (80) de l'alimentation des bobinages en fonction d'une information de position du rotor.

4. Machine électrique tournante selon la revendication 3, dans laquelle ladite information de position du rotor est fournie par un capteur angulaire.

5. Machine électrique tournante selon l'une des revendications 1 à 4, comprenant également un dispositif d'engrènement (16, 25) entre le rotor (6) et le stator (1) afin de garantir un roulement sans glissement du rotor dans le stator.

6. Machine électrique tournante selon l'une des revendications 1 à 5 dans laquelle l'arbre (11) est assujetti au rotor (6) par système de transmission à doigts (32) d'entraînement coopérant avec des lumières (30) de taille supérieure à la section des doigts (32).

7. Machine électrique tournante selon la revendication 6, dans laquelle lesdites lumières (30) comprennent chacune un dispositif de roulement mécanique (32).

8. Machine électrique tournante selon la revendication 7, dans laquelle chaque doigt d'entraînement (32) comprend une surface d'adhérence comprenant un joint (33b), sur une surface d'appui sur laquelle le roulement mécanique correspondant s'appuie.

9. Machine électrique tournante selon l'une des revendications 1 à 5 dans laquelle l'arbre est assujetti au rotor (6) par système de transmission à double engrenage.

10. Machine électrique tournante à rotor excentrique selon l'une des revendications précédentes, dans laquelle le stator (1) possède un nombre pair de pôles (7) et dont le sens des bobinages du stator (1) sont inversés entre deux pôles successifs, et tous reliés en série.

11. Machine électrique tournante à rotor excentrique selon les revendications 1 et 2 en combinaison, **caractérisée en ce que** le contrepoids (19) comprend deux séries de galets (20), l'une pour son roulement sur le stator et l'autre pour son roulement sur le rotor.

**Patentansprüche**

1. Rotierende elektrische Maschine mit einem Exzenterrotor, der einen Stator (1) und einen exzentrischen Rotor (6) umfasst, wobei:

- der Stator (1) eine Mehrzahl von Magnetpolen (7) umfasst, die in Umfangsrichtung verteilt sind, um einen zylindrischen geschlossenen Raum zu definieren,
- der Rotor (6) im Allgemeinen zylindrisch geformt ist mit einem Durchmesser, der kleiner als der des geschlossenen Raums ist und eine Mehrzahl von in Umfangsrichtung verteilten Magnetpolen (7) umfasst, wobei die Anzahl der Magnetpole (7) des Stators größer ist als die Anzahl der Magnetpole (7b) des Rotors,
- der Rotor im Innern des geschlossenen Raums rollt,
- auf der Ebene der elektromagnetischen Wechselwirkungszone zwischen dem Stator (1) und dem Rotor (6) die Entwicklung eines Statorpols (1) und die Entwicklung eines Rotorpols (6) im Wesentlichen gleich lang sind,

die Maschine auch eine Welle (11) umfasst, die der Rotationskomponente des Rotors (6) unterliegt, Maschine, **dadurch gekennzeichnet, dass** sie ferner ein Gegengewicht (19) in Form eines Halbmonds umfasst, das mit dem Rotor (6) eine Einheit bildet, deren Schwerpunkt sich in der Nähe der Statorachse (1) befindet.

2. Rotierende elektrische Maschine nach Anspruch 1, wobei der Stator (1) zumindest eine Rollenlaufbahn (4a, 5a) umfasst, in deren Innern eine Rollenlaufbahn (4b, 5b) des Rotors (6) rollfähig ist, wobei die Rollenlaufbahnen (4a, 5a, 4b, 5b) ein komplementäres Profil aufweisen, das eine axiale Rückkopplungskraft erzeugen kann.

3. Rotierende elektrische Maschine nach Anspruch 1 oder 2, wobei die Pole (7) des Stators (4) Wicklungen (7a) und ferner Mittel zum Steuern (80) der Versorgung der Wicklungen gemäß einer Rotorlageinformation umfassen.

4. Rotierende elektrische Maschine nach Anspruch 3, wobei die Rotorlageinformation durch einen Winkelsensor bereitgestellt wird.

5. Rotierende elektrische Maschine nach einem der Ansprüche 1 bis 4, die auch eine Eingriffsvorrichtung (16, 25) zwischen dem Rotor (6) und dem Stator (1) umfasst, um ein schlupffreies Rollen des Rotors im Stator zu gewährleisten.

6. Rotierende elektrische Maschine nach einem der Ansprüche 1 bis 5, wobei die Welle (11) dem Rotor (6) durch ein Antriebszapfen-Übertragungssystem (32) unterliegt, das mit Öffnungen (30) zusammenwirkt, die größer als der Zapfenquerschnitt (32) sind.

7. Rotierende elektrische Maschine nach Anspruch 6, wobei die Öffnungen (30) jeweils eine mechanische Lagervorrichtung (32) umfassen.

8. Rotierende elektrische Maschine nach Anspruch 7, wobei jeder Antriebszapfen (32) eine Haftfläche mit einer Dichtung (33b) auf einer Auflagefläche umfasst, auf der das entsprechende mechanische Lager gelagert ist.

9. Rotierende elektrische Maschine nach einem der Ansprüche 1 bis 5, wobei die Welle dem Rotor (6) durch ein Doppelgetriebesystem unterliegt.

10. Rotierende elektrische Maschine mit einem exzentrischen Rotor nach einem der vorstehenden Ansprüche, wobei der Stator (1) eine gerade Anzahl von Polen (7) aufweist und bei der die Richtung der Statorwicklungen (1) zwischen zwei aufeinanderfolgenden Polen umgekehrt und alle in Reihe geschaltet sind.

11. Rotierende elektrische Maschine mit exzentrischem Rotor nach den Ansprüchen 1 und 2 in Kombination, **dadurch gekennzeichnet, dass** das Gegengewicht (19) zwei Reihen von Laufrollen (20) umfasst, eine für ihr Lager auf dem Stator und die andere für ihr Lager auf dem Rotor.

**Claims**

1. A rotary electric machine with an eccentric rotor comprising a stator (1) and an eccentric rotor (6), wherein:

   - the stator (1) comprises a plurality of magnetic poles (7) distributed circumferentially in order to define a closed cylindrical space,
   - the rotor (6) has a substantially cylindrical shape with a diameter less than that of said closed space and comprises a plurality of magnetic poles (7) distributed circumferentially, the number of magnetic poles (7) of the stator being superior to the number of magnetic poles (7b) of the rotor,
   - the rotor rotates inside the closed space,
   - at the area of the electromagnetic interaction between the stator (1) and the rotor (6), the evolute of a stator pole (1) and the evolute of a rotor pole (6) are of substantially equal lengths,

   the machine also comprising a shaft (11) depending on the rotational component of the rotor (6),
   the machine being **characterized in that** it further comprises a counterweight (19) having a substantially moon crescent shape forming with the rotor (6) an assembly of which barycenter is located in the vicinity of the axis of the stator (1).

2. The rotary electric machine according to claim 1, wherein the stator (1) comprises at least one rolling track (4a, 5a) inside which a rolling track (4b, 5b) of the rotor (6) is adapted to roll, the rolling tracks (4a, 5a, 4b, 5b) having a complementary profile able to create an axial counter-reaction force.

3. The rotary electric machine according to claim 1 or 2, wherein the poles (7) of the stator (4) comprise windings (7a), and further comprise means for controlling (80) the power supply of the windings according to position information of the rotor.

4. The rotary electric machine according to claim 3, wherein said position information of the rotor is provided by an angular sensor.

5. The rotary electric machine according to any of claims 1 to 4, also comprising a device for meshing (16, 25) between the rotor (6) and the stator (1) in order to guarantee a non-slip rotation of the rotor in the stator.

6. The rotary electric machine according to any of claims 1 to 5, wherein the shaft (11) is secured to the rotor (6) by a drive pin (32) transmission system cooperating with holes (30) of a size greater than the section of the pins (32).

7. The rotary electric machine according to claim 6, wherein said holes (30) each comprise a mechanical bearing (32).

8. The rotary electric machine according to claim 7, wherein each driving pin (32) comprises an adherence surface comprising a joint (33b), on a bearing surface against which the corresponding mechanical bearing bears.

9. The rotary electric machine according to any of claims 1 to 5, wherein the shaft is coupled to the rotor (6) by a twin-gear transmission system.

10. The rotary electric machine with an eccentric rotor according to any of the preceding claims, wherein the stator (1) has an even number of poles (7) and of which directions of the windings of the stator (1) are inverted between two successive poles, and all connected in series.

**11.** The rotary electric machine with an eccentric rotor according to claims 1 and 2 taken in combination, **characterized in that** the counterweight (19) comprises two series of rollers (20), one for its rotation on the stator and the other for its rotation on the rotor.

FIG. 1
4
4a
E'
17
E
13
4b
4c
4d
4a
4b
3
19a
7b
2
19b
7
19
19a
1
5a
5
5b
18
12
11
7b
5b
5a
16
25
15
14
24
6

19c
1
2
19
19b
3
11
1
7
7a
7b
6
8
20

1
7a
3
701
3
6
8
7b
7

FIG. 2b

# FIG. 3

3
1
4a
19
20
19b
7a
6
8
20
7b

FIG. 4
34
31
32
30
6
1

FIG. 5

31
32
33
33b
6
1
11

11
73
76
72
70
71
1
6
74
75
76

FIG. 6

FIG. 7

UC
80
81
82
83
84
84
84
85
85
85

FIG. 8

1
91
914
912
924
922
92
6

1
6
11
94
93
rs
rd
rre
rri
rr

FIG. 9b

FIG. 9a

1
3
6
100
A
B
C
D
E
F
G
H
I
J
K
L
M
N
O
P
Q
R


FIG. 10a

A
B
C
D
E
F
G
H
I
J
K
L
M
N
O
P
Q
101
N
S
+
–

FIG. 10b

A
B
C
D
E
F
G
H
I
J
K
L
M
N
O
P
Q
R
102

FIG. 10c

1
3
6
110
A
B
C
D
E
F
G
H
I
Z
J
K
L
M
N
O
P
Q
R

FIG. 11a

1
6
111
A
B
C
D
E
F
G
H
I
Z
J
K
L
M
N
O
P
Q

FIG. 11b

1
6
110
A
B
C
D
E
F
G
H
I
Z
J
K
L
M
N
O
P
Q
R
N
S
+
−

FIG. 11c

1
3
6
7
7b
120
122
N
S
R
+
-

FIG. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0565746 A
- JP 11178312 B
- SU 1742953
- US 5672923 A
- DE 102006017713